# EUROPEAN PATENT APPLICATION

(11) **EP 1 314 736 A2**
(43) Date of publication of application: **28.05.2003**
(21) Application number: 02080416.7
(22) Date of filing: 20.11.1997
(51) Int. Cl.: C07F 7/18, C08G 77/04, C08G 77/388, C07F 7/08

(54) **Silicone monomers and oligomers having a carboxyl functional group thereon**

(30) Priority: 22.11.1996 US 754974; 14.08.1997 US 911382
(62) Divisional of application: 97949573.6
(71) Applicant: MONA INDUSTRIES, INC., Paterson New Jersey 07544 (US)
(72) Inventor: Berger, Abe, Summit, NJ 07901 (US); Fost, Dennis L., Ridgewood, NJ 07450 (US)
(74) Representative: Schmitz, Jean-Marie

(57) **Abstract**

There is provided oganosiloxane compounds and oligomers containing at least one carboxylic ester functional group that may be represented by the formula: 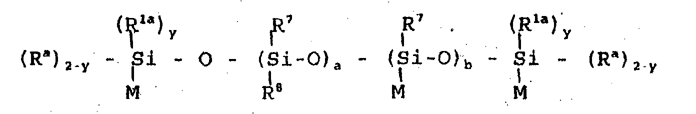 wherein:
R^{a}, which can be the same or different are hydrolysable groups;
R^{1a}, which can be the same or different, are selected from substituted or unsubstituted alkyl, cycloalkyle, substituted or unsubstituted aryl, aralkyl, alkenyl, alkynyl or -O-Si(R⁴)₃ groups or mixtures of the same;
R⁷ and R⁸, which may be the same or different, are selected from alkyl, aryl, capped or uncapped polyoxyalkylene, alkaryl, aralkylene, alkenyl or alkynyl or mixtures of the same;
M, which can be the same or different is selected from hydrogen, R^{a}, R¹ or CH₂-CHR⁶-R⁶-Bₙ¹-Fₙ-R³ with the proviso that at least one M group is CH₂-CHR⁶-R⁶-Bₙ¹-Fₙ-R¹²;
y is zero to 2;
B is -NR⁶, sulfur or oxygen;
R⁶ is hydrogen or alkyl;
R² is linear or branched alkylene of 1-12 carbon atoms;
F is linear or branched alkylène of 1-10 carbon atoms;
n¹ is zero or 1;
n is zero or 1, with the proviso that if n¹ is 1, n is 1 and if n¹ is 0, n is 0;
R³ is 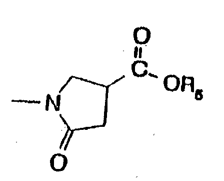
R⁵ is alkyl or trialkylsilyl;
a is from zero to 10; and
b is from zero to 10.

## Description

### Field of the Invention

The present invention relates to organosilane and organosilane compounds and, more particularly to novel organosilane and organosiloxane compounds and oligomers thereof containing a carboxyl acid group and/or its derviratives to a method of making the same.

### Background of the Invention

Various organosilane and organosiloxanes monomers or compounds containing one or more functional groups such as amines, vinyls, mercaptans, epoxies, halogens, and the like are widely known. These compounds have been used in a variety of ways such as coupling agents and adhesion promoters for inorganic materials, as reactants for modifying the properties of organic polymers, as crosslinking agents for curable organic polymers systems, as additives for a variety of home care and personal care compositions, as well as monomers for the preparation of silicon containing polymers.

While silane and siloxane monomers or compounds containing a variety of functional groups are well known and can be readily prepared, organosilane and organosiloxane monomers containing carboxyl acid or functional carboxyl groups including an amphoteric class of organosilanes are generally not available commercially. Heretofore, no convenient method for preparing such monomers with free carboxyl acid groups and carboxyl functional groups has been known or suggested and indirect procedures would generally have to be used for their preparation. Accordingly, the development of organosilane or organosiloxane monomers or compounds containing one or more functional carboxyl groups and methods for readily preparing such compounds would be desirable and it would be particularly advantageous if such methods not only employed readily available materials such as amino-functional silanes, for preparing the novel carboxyl-functional organosilicone monomers including an amphoteric class of such compounds and the salts or esters thereof, but carboxyl-functional organosilicone monomers and oligomers thereof could be prepared containing a variety of other functional groups as well.

While, as indicated, organosilane and organosiloxane monomers or compounds containing a variety of functional groups and methods for preparing the same have, heretofore, been known and used, there is no known disclosure or suggestion of the novel carboxyl-functional organosilane and organosiloxane compounds of the present invention or of the method for making the same herein described.

### Summary of the Invention

It is accordingly an object of the present invention to provide a novel class of organosilane monomers having at least one carboxyl acid group or functional carboxylic group thereon.

It is another object of the present invention to provide a novel class of organosilane and organosiloxane compounds having a novel type of pyrrolidone containing carboxyl-functional group thereon.

It is a further object of the present invention to provide a novel class of amphoteric organosilane compounds.

It is yet another object of the present invention to provide a novel class of organosiloxane compounds and oligomers having at least one functional carboxyl group thereon.

It is still a further object of the present invention to provide a process for readily producing organosilane compounds containing at least one carboxyl-functional group including an amphoteric class of organosilane compounds.

It is still another object of the present invention to provide methods for readily producing organosilane and organosiloxane compounds containing at least one functional carboxyl group and could be prepared containing a variety of other functional groups as well.

These and other objects will become apparent from the description to follow.

In accordance with the present invention, there has now been discovered novel organosilane monomers or compounds containing one or more carboxyl acid group(s) and/or the ester or salt derivatives thereof that may be represented by the following general formula: 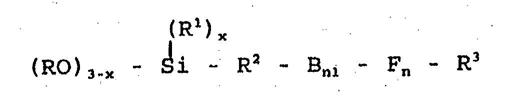 wherein:
R which can be the same or different, are hydrogen,and monovalent hydrocarbon radicals and substituted hydrocarbon radicals such as alkyl and alkoxyalkyl radicals; aryl radicals (phenyl or substituted phenyl); aralkyl radicals; alkenyl or alkynyl radicals; and cycloalkyl radicals;
R¹ which can be the same or different can be substituted or unsubstituted alkyl, substituted or unsubstituted aryl, aralkyl, alkenyl, alkynyl or -R² -Bₙ₁ -Fₙ -R³;
x can be zero to 3;
R² is linear or branched alkylene of 1-12 carbon atoms;
B is -NR⁶, sulfur or oxygen;
R⁶ is hydrogen or alkyl;
n¹ is zero or 1;
F is linear or branched alkylene of 1-10 carbon atoms, preferably ethylene;
n is zero or 1, with the proviso that if n¹ is 1, n is 1 and if n¹ is 0, n is 0;
R³ is 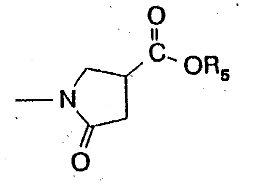
R⁵ is hydrogen, lower alkyl (C₁₋₆) or alkali metal.

In accordance with another aspect of the present invention, there are provided novel organosiloxane monomers or compounds containing one or more functional carboxylic ester group(s) as well as organosilane monomers containing one or more functional carboxylic ester and a variety of other functional groups that may be represented by the following general formula: 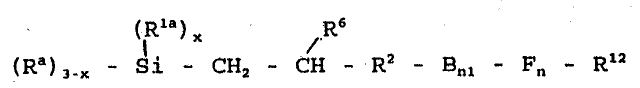 wherein:
R^{a}, which can be the same or different, are hydrolyzable groups such as but not limited to halogen, hydroxy, alkoxy, alkoryalkoxy, acyloxy, N,N-dialkylaminoxy, N-alkylamido, monoalkylamino, dialkylamino, isocyanato, alkylthio or cyano;
R^{1a} which can be the same or different, are substituted or unsubstituted alkyl, cycloalkyl, substituted or unsubstituted aryl, aralkyl, alkenyl, alkynyl or -O-Si-(R⁴)₃;
R⁴ is alkyl of 1-3 carbon atoms;
x can be zero to 3;
R² is linear or branched alkylene of 1-12 carbon atoms;
B is -NR⁶, sulfur or oxygen;
R⁶ is H or alkyl (C₁₋₂₀) ;
n¹ is zero or 1;
F is linear or branched alkylene of 1-10 carbon atoms, preferably ethylene;
n is zero or 1, with the proviso that if n¹ is 1, n is 1 and if n¹ is 0, n is 0;
R¹² is 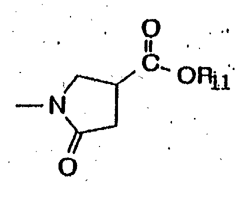
R¹¹ is alkyl (C₁₋₂₀) or trialkysilyl.

In another aspect of the present invention there are provided novel organosiloxane compounds and oligomers containing one or more functional carboxylic ester groups that may be represented by the formula: 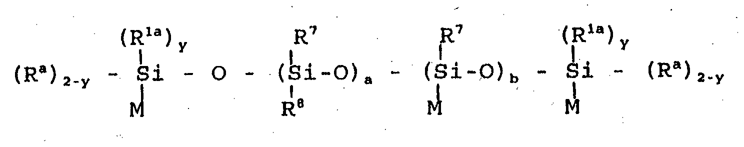 wherein:
R^{a} which can be the same or different, are hydrolyzable groups such as but not limited to halogen, hydroxy, alkoxy, alkoxyalkoxy, acyloxy, N, N-dialkylaminoxy, N-alkylamido, monoalkylamino, dialkylamino, isocyanato, alkylthio or cyano;
R^{1a} are as hereinabove defined;
R⁷ and R⁸, which may be the same or different, are selected from alkyl, aryl, capped or uncapped polyoxyalkylene, alkaryl, aralkylene, alkenyl or alkynyl;
M can be the same or different and is selected from hydrogen, R^{a}, R^{1a} and -CH₂-CHR⁶-R²-Bₙ¹-Fₙ-R¹², with the proviso that at least one M is -CH₂-CHR⁶-R²-Bₙ¹-Fₙ-R¹² ;
y can be zero to 2;
a is from zero to 10;
b is from zero to 10;
R², R¹², R¹¹, B, F, n and n¹ are as defined hereinabove.

In yet another aspect of the present invention there is provided a method for preparing organosilane monomers containing one or more pyrrolidone-containing functional carboxylic acid groups and/or the ester or salt thereof, which comprises reacting an amine- or diamine-functional organosilane monomer having at least one primary amine group with itaconic acid or an ester thereof at an elevated temperature (preferably from about 90°C to about 130°C) for a time sufficient to react, preferably substantially completely react (generally ranging from 1-5 hours), the itaconic acid or ester thereof with the primary amine group(s) on the silane monomer to form an organosilane monomer having at least one pyrrolidone-containing carboxyl functional group.

In still another aspect of the present invention there is provided a method for preparing organosiloxane monomers as well as organosilane monomers containing one or more pyrrolidone-containing functional carboxyl ester groups which comprises reacting a N-alkenyl pyrrolidone containing a carboalkoxyl group of the formula

CH₂ = CR⁶ - R² - Bₙ₁ - Fₙ - R¹²

wherein:
R², R¹², R⁶, F, B, n¹ and n are as hereinabove defined. with an organosilane hydride having one or more hydride groups of the formula 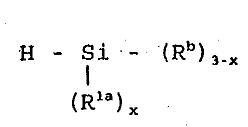
wherein:
R^{b}, which can be the same or different, are hydrolyzable groups such as but not limited to halogen, alkoxy, alkoxyalkoxy, acyloxy, N,N-Dialkylaminoxy, N-alkylamido, monoalkylamino, dialkylamino, isocyanato, alkylthio or cyano, with proviso that the R^{b} grop is not a hydroxy group;
R^{1a} and x are as hereinabove defined.
at an elevated temperature (preferably between 65°C and 130°C) in the presence of a noble metal catalyst for a time sufficient to react the hydride group(s) on the silicon atom with the olefinic group on the pyrrolidone.

### Description of the Preferred Embodiments

In accordance with the present invention there are provided novel organosilane monomers or compounds containing one or more, preferably one, carboxyl acid functional group(s), including an amphoteric class of organosiliane monomers, and/or the esters or salts thereof, which may be represented by the general formula: 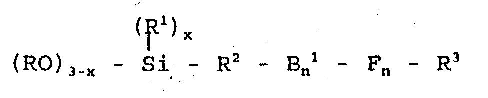 wherein:
R which can be the same or different, are selected from hydrogen, and monovalent hydrocarbon radicals and substituted hydrocarbon radicals such as alkyl radicals, preferably lower alkyl (C₁-C₆) ;
   alkoxyalkyl radicals; aryl radicals, preferably phenyl or substituted phenyl; aralkyl radicals, e.g. benzyl, phenylethyl etc.; alkenyl radicals, e.g. vinyl, allyl, cyclohexenyl, etc. radicals; alkynyl radicals; and cycloalkyl radicals, e.g. cycloheptyl, etc. radicals;
R¹ which can be the same or different, can be substituted or unsubstituted alkyl, preferably lower alkyl (C₁₋₆) ; substituted or unsubstituted aryl; alkenyl; alkynyl or -R²-Bₙ¹-Fₙ-R³;
x can be zero to 3;
R² is linear or branched alkylene of 1-12 carbon atoms, preferably propylene and isobutylene;
B is -NR⁶, sulfur or oxygen;
R⁶ is H or alkyl, preferably lower alkyl (C₁₋₆) ;
n¹ is zero or 1;
F is linear or branched alkylene of 1-10 carbon atoms, preferably ethylene;
n is zero or 1, with the proviso that if n¹ is 1, n is 1 and if n¹ is 0, n is 0;
R³ is 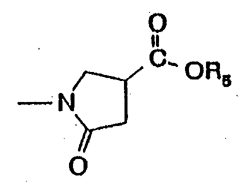
R₅ is H, lower alkyl (C₁₋₆) or alkali metal.

The novel carboxyl acid functional containing organosilane monomers of the present invention including an amphoteric class of organosilane monomers, and/or the ester or salts thereof surprisingly and unexpectedly can be readily prepared by the reaction of an amino-functional organosilane monomer having one or more functional primary amine group(s) or functional diamine group(s) wherein at least one of the amino groups is a primary amine group, with up to about one equivalent, preferably about stoichiometric quantities, of itaconic acid or its ester per primary amine group at an elevated temperature for a time sufficient for substantially all of the itaconic acid or its ester to react with the primary amine group(s) and the formation of pyrrolidone-containing carboxyl-functional group(s) therefrom.

In general, from about 0.5, preferably from about 0.9 to about 1.1, equivalents of itaconic acid or its ester per functional primary amine group is reacted with the primary amine group(s) of the amine or diamine functional organosilane monomer wherein substantially all the itaconic acid, and preferably all the primary amine group(s) are reacted and an organsilane compound with at least one pyrrolidone-containing functional carboxyl acid group(s) and/or its ester or salt is formed.

The reaction can be carried out neat or in an inert solvent such as alcohol, hydrocarbon solvent, chlorinated hydrocarbon and the like, as desired, in general, at elevated temperatures up to about 175°C, preferably from about 90°C to about 130°C. The reaction readily proceeds and generally complete reaction of the itaconic acid or its ester with the available primary amine group(s) occurs in the Michael Addition Reaction manner with the double bond of the itaconic acid followed by immediate cyclization to form a pyrrolidone group, which will occur in from about 1 to 5 hours. Routine analytical techniques for amine and acid values as well as monitoring viscosity, color and water and/or alcohol evolution can be used to determine completion of the reaction.

Amine-functional organosilane monomers suitable for use in accordance with the practice of the invention are compounds that may be represented by the formula: 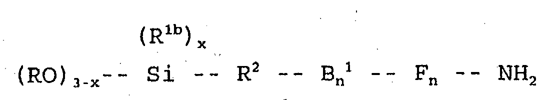 wherein:
R which can be the same or different, can be selected from hydrogen; and monovalent hydrocarbon and monovalent substituted hydrocarbon radicals such as alkyl radicals, preferably lower alkyl (C₁-₆) ;
   alkoxyalkyl radicals; aryl radicals, preferably phenyl or substituted phenyl; aralkyl radicals, e.g. benzyl, phenylethyl, etc.; alkenyl radicals, e.g. vinyl, allyl, cyclohexenyl etc. radicals; alkynyl radicals; and cycloalkyl, e.g. cycloheptyl, etc; with the proviso that the various R substituents are compatible with each other and the NH₂ group;
R^{1b}, which can be the same or different can be substituted or unsubstituted alkyl, preferably lower alkyl (C₁₋₆) ; substituted or unsubstituted aryl; alkenyl; alkynyl; or - R²-Bₙ¹-Fₙ-NH₂;
x can be zero to 3;
R² is linear or branched alkylene of 1-12 carbon atoms, preferably propylene and isobutylene;
B is -NR⁶, sulfur or orygen;
R⁶ is H or lower alkyl (C₁₋₆) ;
n¹ is zero or 1;
F is linear or branched alkylene of 1-10 carbon atoms, preferably ethylene;
n is zero or 1 with the proviso that if n¹ is 1, n is 1 and if n¹ is 0, n is 0.

Suitable amine-functional organosilane monomers include organosilane compounds having one or more primary amine functional group(s) and organosilane compounds having one or more functional diamine group(s) wherein at least one of the amino groups is a primary amine group. While, as indicated, anine-functional organosilane compounds suitable for use in accordance with the practice of the invention may also include a variety of other substituent groups, it would be evident to those having skill in the art that compounds having substituent groups which are not compatible with other substituent groups and/or with the primary amine groups, such as halogen, isocyanato and acyloxy groups would not be suitable for use. Suitable compounds are well known and are available commercially, for example, from Dow Corning, General Electric, Th.Goldschmidt AG, Shin-Etsu; OSI division of Witco and Hüls.

Exemplary suitable amine functional silane monomers include aminopropyl trimethoxysilane, aminopropyl triethoxysilane, aminoisobutyl triethoxy or trimethoxysilane, aminoethylthiopropyl triethoxysilane, aminopropylmethyl diethoxy or dimethoxy silane aminopropoxypropyl trimethoxy silane, aminoundecyl trimethoxy silane, aminopropyl phenyldimethoxy silane, aminopropyl dimethylmethoxy silane and aminobutyl methyl dimethoxy silane. Exemplary suitable functional diamine silane monomers, preferably for use in the preparation of an amphoteric class of silane monomers, include organosilanes having one or more functional aminoalkylaminoalkylene groups such as aminoethylaminopropyl trimethoxy or triethoxy silane, aminoethylaminoisobutyl triethoxy or trimethoxy silane and aminoethylaminoisobutylmethyl diethoxy or dimethoxy silane.

As indicated, the pyrrolidone-containing carboxyl-functional organosilane monomers or compounds of the present invention including the amphoteric class of organosilane monomers of the present invention are readily prepared by reaction of amine-functional organosilane monomers as herein described with itaconic acid or its ester. Itaconic acid (methylene succinic acid) is a compound of the formula:

CH₂ = C(COOR⁶) CH₂ COOR⁶

wherein R⁶, which can be the same or different, is hydrogen or lower alkyl (1-6 carbon atoms).

The compound itaconic acid is available commercially from Pfizer Chemicals Division and Rhone Poulenc whereas ester derivatives thereof are available from Morflex, Inc., Greensboro, N.C. The compounds are produced by known fermentation techniques although chemical synthesis methods are also known.

In accordance with another aspect of the present invention there are provided novel organosiloxane monomers or compounds containing a carboxylic ester functional group as well as organosilane monomers containing a variety of substituent groups which may be represented by the general formula: 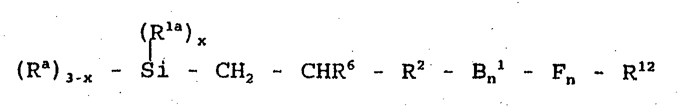 wherein:
R^{a} which can be the same or different, are hydrolyzable groups such as but not limited to halogen, hydroxy, alkoxy, alkoxyalkaxy, acyloxy, N,N-Dialkylaminoxy, N-alkylamido, monoalkylamino, dialkylamino, isocyanato, alkylthio or cyano;
R^{1a} which can be the same or different, are substituted or unsubstituted alkyl, preferably lower alkyl (C₁- C₆);cycloalkyl, e.g. cycloheptyl; aralkyl, e.g. benzyl,phenylethyl etc.; substituted or unsubstituted aryl;alkenyl; alkynyl or -OSi(R⁴)₃;
R⁴ is alkyl of 1-3 carbon atoms, preferably methyl;
x can be zero to 3;
R² is linear or branched alkylene of 1-12 carbon atoms, preferably methylene;
B is -NR⁶, sulfur or oxygen;
R⁶ is H or alkyl (C₁₋₂₀), preferably hydrogen or methyl;
n¹ is zero or 1;
F is linear or branched alkylene of 1-10 carbon atoms, preferably ethylene;
n is zero or 1, with the proviso that if n¹ is 1, n is 1 and if n¹ is 0, n is 0;
R¹² is 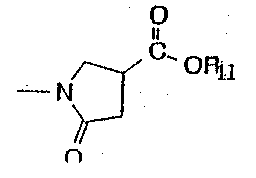
R¹¹ is alkyl (C₁₋₂₀), preferably lower alkyl (C₁₋₆) or trialkylsilyl.

In another aspect of the present invention there are also provided organosiloxane compounds and oligomers containing one or more functional carboxylic ester groups that may be represented by the formula: 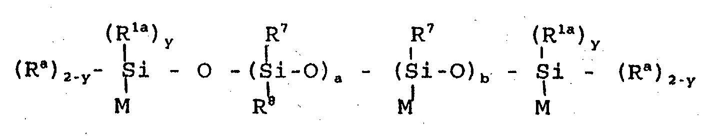 wherein:
R^{a}, which can be the same or different, are hydrolyzable groups such as but not limited to halogen, hydroxy,alkoxy, alkoxyalkoxy, acyloxy, N,N-dialkylaminoxy, N-alkylamido, monoalkylamino, dialkylamino, isocyanato, alkylthio or cyano;
R^{1a} which can be the same or different, are substituted or unsubstituted alkyl, cycloalkyl, substituted or unsubstituted aryl, aralkyl, alkenyl, alkynyl or -O-Si-(R⁴)₃;
R⁷ and R⁸, which may be the same or different, are selected from alkyl, aryl, capped or uncapped polyoxyalkylene, alkaryl, aralkylene, alkenyl or alkynyl;
M can be the same or different and is selected from hydrogen, R^{a}, R^{1a} and -CH₂-CHR₆-R²-Bₙ¹-Fₙ-R¹², with the proviso that at least one M group is -CH₂-CHR₆-R²-Bₙ¹-Fₙ-R¹²;
y can be zero to 2;
a is from zero to 10;
b is from zero to 10;
R², R⁴, R¹², R⁵, B, F, n and n¹ are as defined hereinabove.

The novel carboxylic ester functional organosiloxane monomers and organosilane monomers containing a variety of substituent groups of the present invention surprisingly and unexpectedly can be readily prepared by reacting a silane monomer having one or more hydride substituents on the silicon atom of the formula: 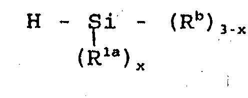 with a pyrrolidone nucleus containing a N-monosubstituted terminal olefinic group of the formula:

CH₂ = CR⁶ - R² - Bₙ¹ - Fₙ - R¹²

wherein:
R^{b} which can be the same or different, are hydrolyzable groups such as but not limited to halogen, alkoxy, alkoxyalkoxy, acyloxy, N,N-Dialkylaminoxy, N-alkylamido, monoalkylamino, dialkylamino, isocyanato, alkylthio or cyano, with proviso that the R^{b} group is not a hydroxyl group;
R^{1a} which can be the same or different, are substituted or unsubstituted alkyl, preferably lower alkyl (C₁-C₆) ; cycloalkyl, e.g. cycloheptyl; aralkyl, e.g. benzyl, phenylethyl etc.; substituted or unsubstituted aryl; alkenyl; alkynyl or -OSi(R⁴)₃;
R⁴ is alkyl of 1-3 carbon atoms, preferably methyl;
x can be zero to 3;
R² is linear or branched alkylene of 1-12 carbon atoms, preferably methylene;
B is -NR⁶, sulfur or oxygen;
R⁶ is H or alkyl (C₁₋₂₀) ; preferably hydrogen or methyl; n¹ is zero or 1;
F is linear or branched alkylene of 1-10 carbon atoms, preferably ethylene;
n is zero or 1, with the proviso that if n¹ is 1, n is 1 and if n¹ is 0, n is 0;
R¹² is 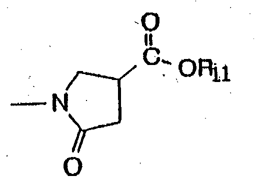
R¹¹ is alkyl, preferably lower alkyl (C₁₋₆) or trialkylsilyl.

The reaction is carried out in the presence of a noble metal (Group VIII metal) catalyst, preferably soluble platinum, at an elevated temperature (65°C to 130°C) for a time sufficient for substantially all of the N-alkenyl carboalkoxy containing pyrrolidone to react with the hydride group(s).

The reaction can be carried out neat or in inert solvents such as toluene, benzene, chlorobenzene, heptane and the like. In general, from about 0.5, preferably from about 0.9 to 1.1 equivalents of the N-alkenyl carboalkoxy containing pyrrolidone groups per functional hydride group(s) is reacted with the hydride groups of the silane monomer, wherein substantially all the N-alkenyl carboalkoxy containing pyrrolidone and, preferably all of the functional hydride group(s) are reacted and an organosilane or organosiloxane compound with at least one pyrrolidone-containing functional-carboxylic ester groups) is formed. The reaction is carried out in the presence of a noble metal catalyst. Suitable platimum catalysts include solubilized platinum or platinum metal on supports such as alumina, charcoal and the like. In general from about 10⁻³ to 10⁻⁶ moles of platinum per mole of hydride group can be used.

The carboalkoxy containing pyrrolidone reactant suitable for use in accordance with the practice of the present invention may be prepared by the reaction of an olefinic amine having a functional primary amine group(s) of the formula:

CH₂ = CR⁶ - R² - Bₙ¹ - Fₙ - NH₂

wherein:
R² is linear or branched alkylene of 1-12 carbon atoms,preferably methylene;
B is -NR⁶, sulfur or oxygen;
R⁶ is H or alkyl, preferably hydrogen or methyl;
F is linear or branched alkylene 1-10 carbon atoms, preferably ethylene;
n is zero or 1; and
n¹ is zero or 1, with the provisio that if n¹ is 1, n is 1 and if n¹ is 0, n is 0;

with up to about one equivalent, preferably about stoichiometric quantities, of itaconic ester per primary amine group at an elevated temperature for a time sufficient for substantially all of the itaconic ester to react with the primary amine group(s) and the formation of pyrrolidone containing a carboalkoxyl functional group(s).

As previously indicated, Itaconic acid (methylene succinic acid) and/or ester is a compound of the formula:

CH₂ = C(COOR⁶) -CH₂-COOR⁶

wherein
R⁶, which can be the same or different, is hydrogen or alkyl (C₁₋₂₀) preferably lower alkyl (1-6 carbon atoms).
which compound is available commercially from Pfizer Chemicals Division and Rhone Poulenc and ester derivatives thereof are available from Morflex, Inc., Greensboro, N.C.

Olefinic amine compounds suitable for use are any olefinic amines including diamines having at least one primary amine group of the formula:

CH₂ = CR⁶ - R² - Bₙ₁ - Fₙ - NH₂

wherein,
R², R⁶, B, F, n and n¹ are as hereinabove defined.

Exemplary suitable allyl amine compounds include allyl amine, methallyl amine, allyloxypropyl amine, allylthiopropyl amine, methallyloxypropyl amine and exemplary suitable allyl diamine compounds are N-allyl ethylene diamine, N-allyl propylene diamine and N-allyl, N-methyl propylene diamine.

In general, from about 0.5, preferably from about 0.9 to about 1.1, equivalents of itaconic ester per functional primary amine group is reacted with the primary amine group of the olefinic amine compound wherein substantially all of the itaconic ester and preferably all the primary amine group(s) are reacted and an N-alkenyl carboalkoxy compound containing a pyrrolidone nucleus is formed of the formula:

CH₂ = CR⁶ - R² - Bₙ₁ - Fₙ - R¹²

wherein R², R⁶, B, F, R¹², n¹ and n are as defined hereinabove.

The reaction can be carried out neat or in an inert solvent such as alcohol, hydrocarbon solvent, chlorinated hydrocarbon and the like, as desired, in general at elevated temperatures up to about 175°C, preferably from about 90°C to about 130°C. The reaction readily proceeds and generally complete reaction of the itaconic ester with the available primary amine group(s) occurs in the Michael Addition manner with the double bond of the itaconic ester followed by immediate cyclization to form a pyrrolidone group which will occur in from about 1 to 5 hours.

The organosilicone monomers according to the present invention are useful, for example, as coupling agents and adhesion promoters for inorganic materials, as reactants for modifying the properties of organic polymers, as crosslinking agents for curable organic polymers, as additives for personal and home care products, as . precursors for a wide variety of organo- and organosilicone polymers of varying molecular weights and the like.

The above is a general description of the present invention. The following examples are given for the purpose of illustration and are not intended in any way to limit the invention as claimed. Unless noted to the contrary, proportions are on a weight basis.

### EXAMPLE 1

This experiment illustrates the method for making N-(Trimethoxysllylpropyl)-4-carboxy pyrrolidone

A mixture of 22.1 grams of gamma aminopropyl trimethoxy-silane (0.1 mole) and 13 grams of itaconic acid is formed in a reaction vessel. A heterogeneous mixture initially results. The mixture is slowly heated to about 110 - 115°C with agitation whereupon a slightly exothermic reaction occurs and a clear melt results with some water being evolved. The product is examined by IR and its structure is consistent with N-Trimethoxysilylpropyl)-4-carboxyl pyrrolidone.

### EXAMPLE 2

A reaction mixture of 41.2 grams 3-(Aminoethyl) aminopropylmethyldimethoxysilane and 31.6 grams of dimethyl itaconate is charged to a reaction vessel with good agitation and heated carefully to about 120°C. A mild exotherm occurs resulting in a clear melt with the simultaneous evolution of methanol. The reaction mixture is heated at 120°C for 3 hours. An alkali number determination at this point indicates that the primary amino group is preferentially reacted (alkali number of 160 vs. theoretical of 162). Analysis by NMR confirms the structure of the product to be methyl N-(methyldimethoxysilyl pyrrolidone ethyl pyrrolidone-4-methylcarboxylate.

### EXAMPLE 3

This experiment illustrates the synthesis of N-(Trimethoxysilylpropylaminoethyl)-4-carbomethoxy pyrrolidone.

A mixture of 44.5 grams of aminoethylaminopropyl trimethoxysilane (0.2 mole) and 31.6 grams of dimethyl itaconate are charged to a reaction vessel and slowly heated with agitation to about 130°C. An exothermic reaction occurs, methanol is distilled from the system and a clear melt liquid results. The reaction mixture is heated at 125°C for 3 hours. The alkali number of the reaction product is 150 compared to a required number of 161.

### EXAMPLE 4

This experiment illustrates the preparation of N-(mixed hydroxy, ethoxysilylpropyl)-4-carboxy pyrrolidone.

A mixture of 44.2 grams (0.2 mole) of aminopropyl triethoxysilane obtained as KB903 from Shin Etsu with 26 grams of itaconic acid which forms a solid dispersed in a liquid is charged to a reaction vessel. The mixture is slowly heated with agitation to 90°C whereupon an exotherm results which raises the reaction mixture temperatures to 125°C. At 125°C, a clear yellow homogenous melt results with water and ethanol being formed. The alkali number of the product is zero and an acid number of 195°C. The product is very soluble in water

### EXAMPLE 5

This example illustrates the preparation of N-(Diethoxymethylsilyl propyl)-4-Carbomethoxy pyrrolidone.

A mixture of 38.2 grams aminopropylmethyldiethoxy silane (0.2 moles) and 31.6 grams of dimethyl itaconate are charged to a reaction vessel with agitation. A slight exotherm occurs raising the reaction mixture temperature from about 26°C to about 46°C. The reaction is allowed to proceed at 82°C for 6 hours after which the reaction mixture is distilled at 153-155°C, 6mm. with the collection of 112 grams of a colorless liquid. The alkali number of the reaction product is zero.

### EXAMPLE 6

This example illustrates the preparation of N-(Trimethoxysilyl propoxypropyl)-4-carbomethoxy pyrrolidone.

A reaction mixture of 30.2 grams of aminopropoxypropyl trimethoxy silane (0.2 mole) ad 38.2 grams of dimethyl itaconate is charged to a reaction vessel with agitation which results in a slight exotherm. The reaction mixture is heated for 6 hours at 110°C and then distilled at reduced pressure. A colorless liquid reaction product is isolated and the structure is confirmed by NMR and IR.

### EXAMPLE 7

This example illustrates the preparation of N-(Triethoxysilylpropylthiopropyl)-4-carboethoxy pyrrolidone.

A reaction mixture of 0.2 moles of aminopropylthio propyltriethoxysilane and equivalent weight of ethyl itaconate is charged to a reaction vessel with agitation and heated at about 95°C for 6 hours. After distillation under reduced pressure a colorless liquid reaction product is isolated.

### EXAMPLE 8

This example illustrates the preparation of 1,1,1,3,5,5,5-heptamethyl-3-[4-carboxyl pyrrolidone-1-yl-propyl] trisiloxane.

Equal molar proportions of 1,1,1,3,5,5,5 heptamethyl-3-aminopropyl trisiloxane and itaconic acid are charged to a reaction vessel and heated, with agitation, for 6 hours at 110-120°C. The reaction mixture is isolated as a colorless liquid having an alkali number of zero.

### EXAMPLE 9

This example illustrates the method for making N-allyl-4-carbomethoxy pyrrolidone.

A solution of 158 grams of Dimethyl itaconate and 200ml of methanol is charged to a reaction vessel and 57 grams of allyl amine is added dropwise to the itaconate solution with agitation in the reaction vessel. During addition of allyl amine to the reaction mixture, the temperature increased from ambient to 62°C.

Upon complete addition of the allyl amine the reaction mixture is kept at reflux for 4 additional hours. The methanol is distilled from the reaction mixture and the reaction product is distilled at 115°C under reduced pressure (1mm). A yield of 92% is obtained. The structure of the reaction product is evaluated by IR.

### EXAMPLE 10

This example illustrates the preparation of N-(Dimethyl chlorosilylpropyl)-4-carbomethoxy pyrrolidone.

To 183 grams of N-allyl-4-carbomethoxy pyrrolidone prepared as described in Example 9 and 1 ml of 0.1 N-chloroplatinic acid in isopropanol charged to a reaction vessel with agitation, 94.5 grams of Dimethyl chlorosilane is added dropwise to the reaction mixture and an exotherm occurs increasing the reaction mixture temperature to 90-95°C. The reaction temperature is maintained at 95° C for 4 hours after all the silane reactant is added to the reaction mixture. A colorless oil is obtained by distilling at 168-170°C under 2mm pressure with about 90% yield. The structure of the reaction product is confirmed by NMR and IR.

### EXAMPLE 11

This example illustrates the preparation of N-(Dichloromethylsilypropyl)-4-Carbomethoxy pyrrolidone.

A reaction mixture of 183 grams of N-allyl-4-carbomethoxy pyrrolidone prepared as described in Example 1 and 1ml of 0.1N chloroplatinic acid in isopropanol is charged to a reaction vessel. 115 grams of methyldichlorosilane is added dropwise to the reaction mixture with agitation during which an exothermic reaction occurs increasing the temperature of the reaction mixture to 90-95°C. The temperature of the reaction mixture is maintained at 95°C for 4 hours after the addition of the silane is completed. The reaction mixture is distilled during which a colorless oil is obtained at a temperature of 174-176°C under 2mm pressure. A yield of product of 93% is obtained and the structure is confirmed by IR and NMR.

### EXAMPLE 12

This example illustrates the preparation of N-(Triacetoxysilylpropyl)-4-carbomethoxy pyrrolidone.

A reaction mixture is prepared from 183 grams of N-allyl-4-carbomethoxy prepared as described in example 9 and 1ml of 0.1 N chloroplatinic acid in a reaction vessel. 206 grams of triacetoxysilane is added dropwise to the reaction during which an exotherm is created increasing the reaction mixture to 110-115°C. After all the silane reactant has been added, the temperature of the reaction mixture is maintained at 110°C for 3 hours. A low melting reaction product is recovered from the solid reaction vessel and the structure of the product is confirmed by NMR and IR.

### EXAMPLE 13

This example illustrates the preparation of N-[Bis(methyl ethylketoximino) methylsilylpropyl]-4-carbomethoxy pyrrolidone.

A reaction mixture is charged to a reaction vessel containing equal molar amounts of Bis(methyl ethyl ketoximino) methyl silane and N-allyl-4-carbomethoxy pyrrolidone and about 10⁻⁴ moles of chloroplatinic acid in isopropanol. The reaction mixture forms an exotherm of about 110°C after which the reaction mixture is maintained at 130°C for 3 hours. The structure of the reaction product is confirmed by NMR and IR.

### EXAMPLE 14

This example illustrates the preparation of N-(Trichlorosilylpropyloxy propyl)-4-carbomethoxy pyrrolidone.

A reaction mixture of 236 grams of N-allyloxypropyl-4-carbomethoxy pyrrolidone prepared by replacing allyl amine with allyloxypropyl amine as described in Example 9. 0.1 N chloroplatinic acid and isopropanol is charged to a reaction vessel and heated to about 85°C. 135.5 grams of Trichlorosilane is added dropwise to the reaction mixture with agitation. The reaction mixture is exothermic and heat is removed to maintain the temperature at about 90-95°C. Upon adding all the trichlorosilane, the reaction temperature is maintained at 120°C for 2 hours. Low boiling is materials are stripped from the reaction mixture under reduced pressure. A yield of 95% of product is obtained and the structure of the reaction product is confirmed by I.R. and NMR.

### EXAMPLE 15

The addition of methyldichlorosilane to N-(allylthiopropyl)-4-carbomethoxy pyrrolidone in the presence of catalytic amounts of chloroplatinic acid results in the formation of N - (methyldichlorosilylpropylthiopropyl)-4-carbomethoxy pyrrolidone with yields and structure confirmed by G.C. analysis, I.R. and NMR.

### EXAMPLE 16

Allyl methyl amine is cyanoethylated with acrylonitrile followed by palladium catalyzed reaction with hydrogen to prepare the reaction product N-allyl, N-methyl, propylene diamine is identified by NMR and I.R.

Equimolar amounts of N-allyl, N-methyl, propylene diamine prepared as described above and Dimethyl Itaconate are charged to a reaction vessel and heated slowly with agitation to 130°-150°C. After the exotherm subsides, the reaction mixture is maintained at 140°C for 3 hours. The reaction product 1-(N-allyl, N-methyl aminopropyl)-4-carbomethoxy pyrrolidone is isolated by distillation.

Triethoxysilane is added dropwise to an equimolar amount of the 1-(N-allyl, N-methyl aminopropyl)-4-Carbomethxyl pyrrolidone prepared above in the presence of 0.1M chloroplatinic acid while maintaining a reaction temperature of 120°-140°C. After completion of the reaction, the product is isolated by fractionation of the reaction mixture and the product is identified by NMR and I.R.

## Claims

1. Organosiloxane compounds and oligomers containing at least one carboxylic ester functional group that may be represented by the formula: 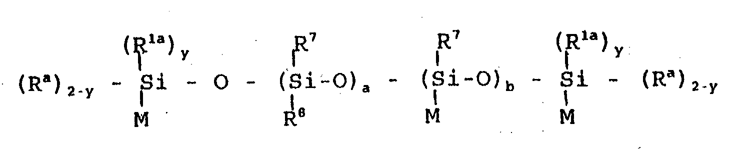 wherein:
R^{a}, which can be the same or different are hydrolysable groups;
R^{1a}, which can be the same or different, are selected from substituted or unsubstituted alkyl, cycloalkyle, substituted or unsubstituted aryl, aralkyl, alkenyl, alkynyl or -O-Si(R⁴)₃ groups or mixtures of the same;
R⁷ and R⁸, which may be the same or different, are selected from alkyl, aryl, capped or uncapped polyoxyalkylene, alkaryl, aralkylene, alkenyl or alkynyl or mixtures of the same;
M, which can be the same or different is selected from hydrogen, R^{a}, R¹ or CH₂-CHR⁶-R⁶-Bₙ¹-Fₙ-R³ with the proviso that at least one M group is CH₂-CHR⁶-R⁶-Bₙ¹-Fₙ-R¹²;
y is zero to 2;
B is -NR⁶, sulfur or oxygen;
R⁶ is hydrogen or alkyl;
R² is linear or branched alkylene of 1-12 carbon atoms;
F is linear or branched alkylène of 1-10 carbon atoms;
n¹ is zero or 1;
n is zero or 1, with the proviso that if n¹ is 1, n is 1 and if n¹ is 0, n is 0;
R³ is 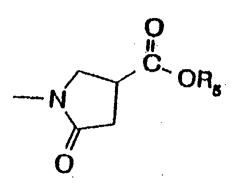
R⁵ is alkyl or trialkylsilyl;
a is from zero to 10; and
b is from zero to 10.

2. Organosiloxane compounds and oligomers as claimed in claim 1, wherein R^{a} are the same or different, hydrolysable groups selected from halogen, hydroxy, alkoxy, alkoxyalkoxy, acyloxy, N, N-dialkylaminoxy, N-alkylamido, monoalkylamino, dialkylamino, isocyanato, alkylthio or cyano groups or mixtures of the same.

3. Organosiloxane compounds and oligomers as claimed in claim 1, wherein the M groups attached to the terminal Si atoms are R^{1a} or R¹ groups or mixtures of the same.

4. The method of preparing organosiloxane compounds of claim 1 containing one or more pyrrolidone groups having functional carboxyl ester groups which comprises reacting a N-alkenyl pyrrolidone containing a carboalkoxyl group of the formula:
CH₂ = CR⁶ - R² - Bₙ₁ - Fₙ - R¹²
wherein:
R² is a linear or branched alkylene of 1-12 carbon atoms;
R⁶ is hydrogen or alkyl;
F is linear or branched alkylene of 1-10 carbon atoms;
B is -NR⁶, sulfur or oxygen;
n¹ is zero or 1;
n is zero or 1, with the proviso that if n¹ is 1, n is 1 and if n¹ is 0, n is 0;
R¹² is 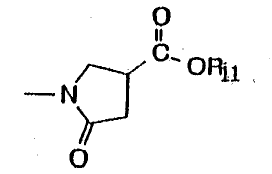
R¹¹ is alkyl or trialkylsilyl;
with an organosilane hydride group of the formula: 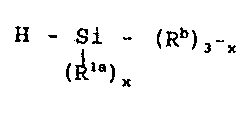
wherein:
R^{b} is selected from a hydrolysable group;
R^{1a} is selected from substituted or unsubstituted alkyl, cycloalkyl, substituted or unsubstituted aryl, aralkyl, alkenyl, alkynyl or -O-Si-(R⁴)₃ groups or mixtures of the same;
x is from 0 to 3;
at an elevated temperature in the presence of a noble metal catalyst for a time sufficient to react the hydride groups on the silicone atom with an olefinic group on the pyrrolidone.

5. The method of claim 4, wherein R^{b} are the same or different hydrolysable group selected from halogen, alkoxy, alkoxyalkoxy acyloxy, N, N-Dialkylamoxy, N-alkylamido, monoalkylamino, dialkylamino, isocyanato, alkylthio, or cyano groups or mixtures of the same.
